# EUROPEAN PATENT APPLICATION

(11) **EP 4 608 017 A1**
(43) Date of publication of application: **27.08.2025**
(21) Application number: 23901065.5
(22) Date of filing: 05.12.2023
(51) Int. Cl.: H04W 48/20, H04W 48/16, H04W 76/15, H04W 24/08, H04B 17/318, H04W 84/12

(54) **ELECTRONIC DEVICE FOR PROVIDING WIRELESS LAN COMMUNICATION AND METHOD FOR OPERATING SAME**

(30) Priority: 05.12.2022 KR 20220167794; 11.01.2023 KR 20230003801
(71) Applicant: Samsung Electronics Co., Ltd., Suwon-si, Gyeonggi-do 16677 (KR)
(72) Inventor: NAM, Chounjong, Suwon-si, Gyeonggi-do 16677 (KR); MIN, Sungbin, Suwon-si, Gyeonggi-do 16677 (KR); YANG, Changmok, Suwon-si, Gyeonggi-do 16677 (KR); LEE, Eonji, Suwon-si, Gyeonggi-do 16677 (KR); JEONG, Mincheol, Suwon-si, Gyeonggi-do 16677 (KR); JUNG, Junyeop, Suwon-si, Gyeonggi-do 16677 (KR); CHOI, Junsu, Suwon-si, Gyeonggi-do 16677 (KR)
(74) Representative: Appleyard Lees IP LLP
(86) International application number: PCT/KR2023/019902
(87) International publication number: WO 2024/123046

(57) **Abstract**

Various embodiments of the present invention relate to a device and method for wireless LAN communication in an electronic device. The electronic device comprises a communication circuit and a processor, wherein the processor can: perform a scan when channel state information about a link corresponding to a first frequency band among a plurality of links established with at least one external electronic device satisfies a specified condition; select a first external electronic device on the basis of the scan result; select a second external electronic device detected through the scan when wireless LAN communication based on another frequency band is established with the first external electronic device; and establish a link in the first frequency band with the second external electronic device when wireless LAN communication based on another frequency band is not established with the second external electronic device. Other embodiments may also be possible.

## Description

### [Technical Field]

Various embodiments of the present disclosure relate to a device and method for providing wireless local area network (WLAN) communication in an electronic device of a wireless LAN system.

### [Background Art]

A wireless local area network (WLAN) system may support wireless connection of various electronic devices such as a smartphone, a tablet personal computer (PC), or a notebook by using a specified frequency band (e.g., about 2.4 GHz band, about 5 GHz band, and/or about 6 GHz band).

The wireless LAN system may be installed not only in a private space such as a home, but also in a public space such as an airport, a train station, an office, or a department store. The wireless LAN system may be defined in the Institute of Electrical and Electronics Engineers (IEEE) 802.11 standard. For example, the IEEE 802.11 standard is continuously evolving, such as IEEE 802.11b, IEEE 802.11a, IEEE 802.11g, IEEE 802.11n, IEEE 802.11ac, IEEE 802.11ax, and IEEE 802.11be.

### [Disclosure of Invention]

### [Technical Problem]

When the electronic device detects at least one access point (AP) through a scan, the electronic device may perform wireless LAN communication through a first AP selected based on channel state information (e.g., received signal strength indicator (RSSI)) of each AP. The electronic device may add information related to at least one AP detected through the scan to a scan list (e.g., roaming scan channel list).

When the channel state information with the first AP satisfies a specified change condition, the electronic device may perform the scan to identify whether there is an AP accessible by the electronic device. When the electronic device detects at least one AP through the scan, the electronic device may switch (e.g., roam) an AP for wireless LAN communication to a second AP selected based on channel state information (e.g., RSSI) of each AP. For example, the scan may include a scan (e.g., partial scan) based on the scan list and/or a scan (e.g., full band scan) based on all frequency bands supportable by the electronic device.

The electronic device may perform wireless LAN communication through a plurality of links set up with at least one AP based on a plurality of frequency bands (e.g., about 2.4 GHz band, about 5 GHz band, and/or about 6 GHz band). The electronic device requires a method for efficiently switching an AP for wireless LAN communication through a plurality of links.

The present disclosure is directed to providing a device and method for performing wireless LAN communication through a plurality of links with at least one external electronic device in an electronic device of a wireless LAN system.

Technical problems to be solved by the present disclosure are not limited to the above-mentioned technical problems. That is, other technical problems that are not mentioned may be obviously understood by those skilled in the art to which the present disclosure pertains from the following description.

According to various embodiments, an electronic device may include a communication circuit supporting wireless LAN communication, and a processor operatively connected to the communication circuit. According to an embodiment, the processor may set up a plurality of links with at least one external electronic device. According to an embodiment, the processor may perform a scan when channel state information of a link corresponding to a first frequency band among the plurality of links satisfies specified conditions. According to an embodiment, the processor may select a first external electronic device based on the channel state information of at least one external electronic device detected through the scan. According to an embodiment, the processor may select the second external electronic device based on the channel state information of the remaining external electronic devices, excluding the first external electronic device, among at least one external electronic device detected through the scan when the wireless LAN communication based on a frequency band different from the first frequency band is connected with the first external electronic device. According to an embodiment, the processor may set up the link in the first frequency band with the second external electronic device when the wireless LAN communication based on a frequency band different from the first frequency band is not connected with the second external electronic device.

According to various embodiments of the present disclosure, a method for operating an electronic device may include setting up a plurality of links with at least one external electronic device based on wireless LAN communication. According to an embodiment, the method for operating an electronic device may include performing a scan when channel state information of a link corresponding to a first frequency band among the plurality of links satisfies specified conditions. According to an aspect of the present disclosure, a method for operating an electronic device may include selecting a first external electronic device based on the channel state information of at least one external electronic device detected through the scan. According to an embodiment, the method for operating an electronic device may include selecting a second external electronic device based on the channel state information of the remaining external electronic devices, excluding the first external electronic device, among the at least one external electronic device detected through the scan when the wireless LAN communication based on a frequency band different from the first frequency band is connected with the first external electronic device. According to an embodiment, the method for operating an electronic device may include setting up the link in the first frequency band with the second external electronic device when the wireless LAN communication based on a frequency band different from the first frequency band is not connected with the second external electronic device.

According to various embodiments of the present disclosure, a non-transitory computer-readable storage medium (or a computer program product) storing one or more programs may be described. According to an embodiment, one or more programs may include, when executed by a processor of an electronic device, instructions to perform setting up a plurality of links with at least one external electronic device based on wireless LAN communication, performing a scan when channel state information of a link corresponding to a first frequency band among the plurality of links satisfies specified conditions, selecting a first external electronic device based on the channel state information of at least one external electronic device detected through the scan, selecting a second external electronic device based on the channel state information of the remaining external electronic devices, excluding the first external electronic device, among the at least one external electronic device detected through the scan when the wireless LAN communication based on a frequency band different from the first frequency band is connected with the first external electronic device, and setting up the link in the first frequency band with the second external electronic device when the wireless LAN communication based on the different frequency band is not connected with the second external electronic device.

According to various embodiments of the present disclosure, an electronic device switches an external electronic device corresponding to a link whose channel state information satisfies a specified change condition among a plurality of links with at least one external electronic device (e.g., an access point (AP)), thereby continuously providing wireless LAN communication.

According to various embodiments of the present disclosure, an electronic device switches an external electronic device corresponding to the remaining links, excluding a link whose channel state information satisfies a specified reference quality condition, among a plurality of links with at least one external electronic device (e.g., an access point (AP)), thereby continuously providing wireless LAN communication.

Effects which can be achieved by various embodiments of the present disclosure are not limited to the above-mentioned effects. That is, other effects that are not mentioned may be obviously understood by those skilled in the art to which various embodiments of the present disclosure pertain from the following description.

### [Brief Description of Drawings]

FIG. 1 is a block diagram of an electronic device in a network environment according to various embodiments.
FIG. 2 is an example of a wireless LAN system according to various embodiments.
FIG. 3 is a block diagram of an electronic device for providing wireless LAN communication according to various embodiments.
FIG. 4 is a flowchart for setting up a communication link for wireless LAN communication in an electronic device according to various embodiments.
FIG. 5 is a flowchart for switching an external electronic device for wireless LAN communication in an electronic device according to various embodiments.
FIG. 6 is an example for switching an external electronic device for wireless LAN communication in an electronic device according to various embodiments.
FIG. 7 is a flowchart for switching an external electronic device for wireless LAN communication in an electronic device according to various embodiments.
FIG. 8 is an example for switching an external electronic device for wireless LAN communication in an electronic device according to various embodiments.

### [Mode for the Invention]

Hereinafter, various embodiments are described in detail with reference to the accompanying drawings.

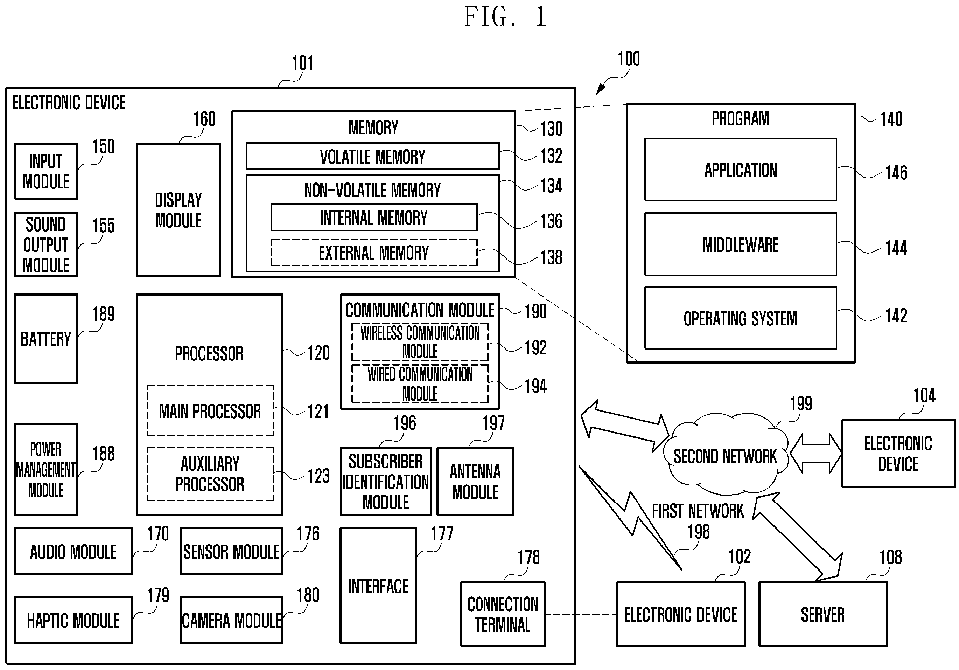

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

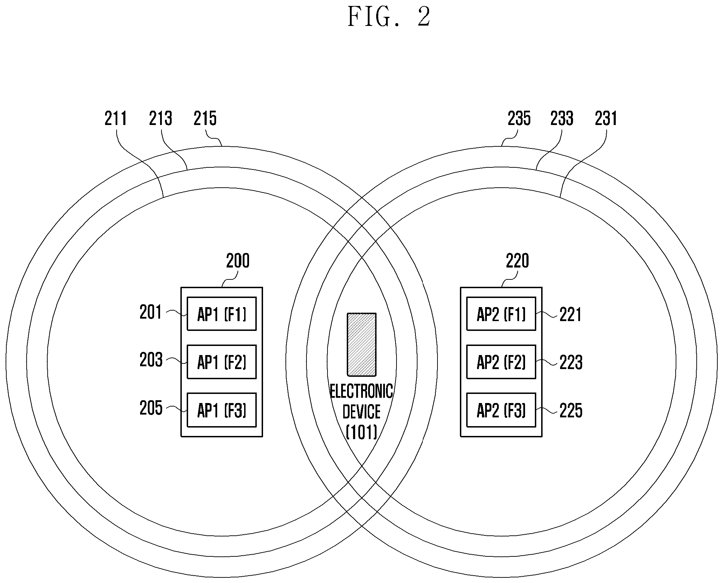

FIG. 2 is an example of a wireless LAN system according to various embodiments.

According to various embodiments referring to FIG. 2, the wireless LAN system may include a first external electronic device 200 and/or a second external electronic device 220 for providing wireless LAN communication to the electronic device 101. For example, the wireless LAN communication may include Wi-Fi as a communication scheme defined in the Institute of Electrical and Electronics Engineers (IEEE) 802.11 standard. For example, the first external electronic device 200 and the second external electronic device 220 may include wireless devices that provide the wireless LAN communication to at least one electronic device 101 located within a communication radius of the wireless LAN system. For example, the first external electronic device 200 and/or the second external electronic device 220 may include an access point (AP) of IEEE 802.11. For example, the electronic device 101 may include a station (STA) of IEEE 802.11.

According to various embodiments, the first external electronic device 200 may support a plurality of frequency bands (e.g., about 2.4 GHz band, about 5 GHz band, and/or about 6 GHz band) 201, 203, and/or 205. According to an embodiment, the first external electronic device 200 may form a plurality of pieces of coverage 211, 213, and/or 215 corresponding to each of the plurality of frequency bands 201, 203, and/or 205 based on propagation characteristics of the frequency bands. The first external electronic device 200 may transmit and/or receive signals and/or data to and/or from the electronic device 101 through at least one of the plurality of frequency bands 201, 203, and/or 205. For example, the first external electronic device 200 may provide different basic service set (BSS) networks through each frequency band. For example, the electronic device 101 may recognize each frequency band 201, 203, or 205 supported by the first external electronic device 200 as different APs. For example, the about 2.4 GHz band may include a frequency band of about 2.4 GHz to about 2.5 GHz. For example, the about 5GHz band may include a frequency band of about 5GHz to about 5.9 GHz. For example, the about 6GHz band may include a frequency band of about 5.9GHz to about 7.2GHz.

According to various embodiments, the second external electronic device 220 may support a plurality of frequency bands (e.g., about 2.4 GHz band, about 5 GHz band, and/or about 6 GHz band) 221, 223, and/or 225. According to an embodiment, the second external electronic device 220 may form the plurality of pieces of coverage 231, 233, and/or 235 corresponding to each of the plurality of frequency bands 221, 223, and/or 225 based on the propagation characteristics of the frequency bands. The second external electronic device 220 may transmit and/or receive signals and/or data to and/or from the electronic device 101 through at least one of the plurality of frequency bands 221, 223, and/or 225. For example, the second external electronic device 220 may provide different BSS networks through each frequency band. For example, the electronic device 101 may recognize each frequency band 221, 223, and/or 225 supported by the second external electronic device 220 as different APs.

According to various embodiments, the electronic device 101 may perform the wireless LAN communication with the first external electronic device 200 and/or the second external electronic device 220. According to an embodiment, the electronic device 101 may perform the wireless LAN communication with the first external electronic device 200 and/or the second external electronic device 220 through a plurality of links. According to an embodiment, the electronic device 101 may perform the wireless LAN communication with the first external electronic device 200 through a first link corresponding to a first frequency band 201 (e.g., about 2.4 GHz band). The electronic device 101 may perform the wireless LAN communication with the second external electronic device 220 through a second link corresponding to the second frequency band 223 (e.g., about 5 GHz band). According to an embodiment, the electronic device 101 may perform the wireless LAN communication through the plurality of links corresponding to the plurality of frequency bands 201, 203, and/or 205 supported by the first external electronic device 200. According to an embodiment, the electronic device 101 may perform the wireless LAN communication through the plurality of frequency bands 221, 223, and/or 225 supported by the second external electronic device 220.

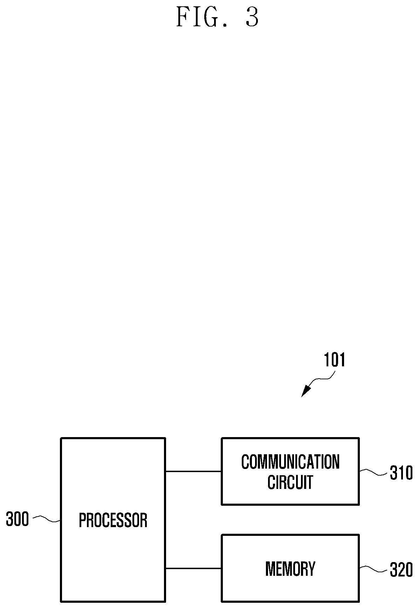

FIG. 3 is a block diagram of an electronic device for providing wireless LAN communication according to various embodiments.

According to various embodiments referring to FIG. 3, the electronic device 101 may include a processor (e.g., including processing circuitry) 300, a communication circuit (or communication circuitry) 310, and/or a memory 320. According to an embodiment, the processor 300 may be substantially the same as the processor 120 of FIG. 1, or may include the processor 120. The communication circuit 310 may be substantially the same as the wireless communication module 192 of FIG. 1, or may include the wireless communication module 192. The memory 320 may be substantially the same as the memory 130 of FIG. 1, or may include the memory 130. According to an embodiment, the processor 300 may be operatively connected to the communication circuit 310 and/or the memory 320.

According to various embodiments, the processor 300 may set up the plurality of links with at least one external electronic device (e.g., the first external electronic device 200 and/or the second external electronic device 220 of FIG. 2). According to an embodiment, the processor 300 may set up a plurality of links in different frequency bands with the first external electronic device 200. For example, the processor 300 may acquire information related to MLO of the first external electronic device 200 from a beacon or probe response frame received from the external electronic device 220 through the first frequency band 201. For example, the information related to the MLO may include not only the first frequency band 201 that has received the beacon or probe response frame, but also the information related to the second frequency band 203 and/or a third frequency band 205 that can be supported for the MLO by the first external electronic device 200. For example, the information related to the frequency band (or link) may include basic service set identifiers (BSSIDs) of each frequency band (or link) and/or parameters related to the MLO. For example, the processor 300 may control the communication circuit 310 to transmit an association request frame related to the plurality of links to the first external electronic device 200 through at least one link based on the information related to the MLO of the first external electronic device 200. For example, the association request frame is information related to setting up of links corresponding to each frequency band 201, 203, or 205, and may include information related to capability and/or operational parameters of each link. For example, when the processor 300 acquires information related to acceptance from the first external electronic device 200 in response to the association request frame, the processor 300 may determine that the plurality of links are set up with the first external electronic device 200. For example, when the processor 300 acquires information related to a rejection related to at least one of the plurality of links from the first external electronic device 200 in response to the association request frame, the processor 300 may determine that setting up at least one link corresponding to the information related to the rejection among the plurality of links with the first external electronic device 200 has failed. For example, at least one link corresponding to the information related to the rejection may be excluded from the setting up of the link with the first external electronic device 200.

According to an embodiment, the processor 300 may set up a plurality of links in different frequency bands with the first external electronic device 200 and/or the second external electronic device 220. For example, the processor 300 may control the communication circuit 310 to perform a scan on the first frequency band (e.g., about 2.4 GHz band). For example, the scan may include a series of operations to identify whether there is the external electronic device accessible by the electronic device 101 through the first frequency band. For example, the external electronic device accessible by that the electronic device 101 through the first frequency band may include an external electronic device whose channel state information related to the external electronic device exceeds specified first reference channel state information. For example, the specified first reference channel state information may include lowest channel state information determined to be able to perform the wireless LAN communication through the external electronic device. For example, the processor 300 may select a candidate device based on the channel state information of at least one external electronic device detected through the scan. For example, the candidate device may include the external electronic device with the best channel state information among at least one external electronic device detected through the scan as being accessible by the electronic device 101 through the first frequency band. For example, the channel state information may include at least one of a reference signal received power (RSRP), a reference signal received quality (RSRQ), a received signal strength indicator (RSSI), or a signal to interference plus noise ratio (SINR). For example, the processor 300 may identify whether the wireless LAN communication is connected with the external electronic device selected as the candidate device through a frequency band (e.g., about 5 GHz band and/or about 6 GHz band) different from the first frequency band. For example, the processor 300 may identify whether the electronic device 101 is connected via the wireless LAN communication with the candidate device through at least one different frequency band excluding the first frequency band based on reduced neighbor report (RNR) information acquired from the candidate device. For example, the processor 300 may identify whether the wireless LAN communication is connected with the candidate device through at least one different frequency band excluding the first frequency band based on a setting value of "co-located AP" of an RNR basic service set (RNR BSS) parameter included in the RNR information acquired from the candidate device through the first frequency band. For example, the RNR information may be included in a beacon signal, a file discovery signal, or a probe response signal that are received from the candidate device through the first frequency band. For example, when the processor 300 determines that the wireless LAN communication is not connected with the candidate device through a frequency band (e.g., about 5 GHz band and/or about 6 GHz band) different from the first frequency band, the processor 300 may control the communication circuit 310 to set up a communication link with the candidate device through the first frequency band. For example, when the processor 300 determines that the wireless LAN communication is connected with the candidate device through the frequency band (e.g., about 5 GHz band and/or about 6 GHz band) different from the first frequency band, the processor 300 may identify whether other candidate devices can be selected. For example, other candidate devices may include an external electronic device having the best channel state information, excluding the candidate device, among at least one external electronic device detected through the scan as being accessible by the electronic device 101 through the first frequency band. For example, when the processor 300 may not select other candidate devices, the processor 300 may control the communication circuit 310 to set up the communication link with the candidate device through the first frequency band. For example, a state in which other candidate devices may not be selected may include a state in which there are no other external electronic devices, excluding the candidate device, in the external electronic devices detected through the scan as being accessible by the electronic device 101 through the first frequency band. For example, when the processor 300 may select other candidate devices, the processor 300 may identify whether the wireless LAN communication is connected with external electronic devices selected as other candidate devices through the frequency band (e.g., about 5 GHz band and/or about 6 GHz band) different from the first frequency band. For example, when the processor 300 determines that the wireless LAN communication is not connected with other candidate devices through the frequency band (e.g., about 5 GHz band and/or about 6 GHz band) different from the first frequency band, the processor 300 may control the communication circuit 310 to set up the communication links with other candidate devices through the first frequency band.

According to an embodiment, when there is no external electronic device detected through the scan, the processor 300 may determine that the communication link for the wireless LAN communication in the first frequency band may not be set up.

According to various embodiments, the processor 300 may identify the channel state information of the plurality of links set up with at least one external electronic device (e.g., the first external electronic device 200 and/or the second external electronic device 220 of FIG. 2). According to an embodiment, the processor 300 may identify the channel state information of each of the plurality of links based on a specified period.

According to various embodiments, when the channel state information of at least one of the plurality of links satisfies a specified change condition, the processor 300 may control the communication circuit 310 to switch (e.g., roam) the external electronic device corresponding to the link satisfying the specified change condition to other external electronic devices. For example, the first link may include one of the plurality of links. For example, the state satisfying the specified change condition may include a state in which channel state information of at least one link is less than or equal to a specified first reference channel state information.

According to an embodiment, when the channel state information of the first link corresponding to the third frequency band (e.g., about 6 GHz band) satisfies the specified change condition, the processor 300 may control the communication circuit 310 to perform a scan on the third frequency band (e.g., about 6 GHz band). According to an embodiment, the processor 300 may select a candidate device based on the channel state information of at least one external electronic device detected through the scan. For example, the candidate device may include an external electronic device having the best channel state information among at least one external electronic device detected through the scan as being accessible by the electronic device 101 through the third frequency band. According to an embodiment, the processor 300 may identify whether the wireless LAN communication is connected with the external electronic device selected as the candidate device through a frequency band (e.g., about 2.4 GHz band and/or about 5 GHz band) different from the third frequency band. For example, the processor 300 may identify whether the wireless LAN communication is connected with the candidate device through at least one different frequency band excluding the third frequency band based on the setting value of the "co-located AP" of the RNR BSS parameter included in the RNR information acquired from the candidate device through the third frequency band. According to an embodiment, when the processor 300 determines that the wireless LAN communication is not connected with the candidate device through the frequency band (e.g., about 2.4 GHz band and/or about 5 GHz band) different from the third frequency band, the processor 300 may control the communication circuit 310 to switch (e.g., roam) the external electronic device corresponding to the third frequency band to the candidate device. For example, the switching to the candidate device may include a series of operations for setting up the communication link with the candidate device through the third frequency band.

According to an embodiment, when the processor 300 determines that the wireless LAN communication is connected with the candidate device through the frequency band (e.g., about 2.4 GHz band and/or about 5 GHz band) different from the third frequency band, the processor 300 may identify whether other candidate devices may be selected. For example, other candidate devices may include an external electronic device having the best channel state information, excluding the candidate device, among at least one external electronic device detected through the scan as being accessible by the electronic device 101 through the third frequency band. According to an embodiment, when the processor 300 may not select other candidate devices, the processor 300 may control the communication circuit 310 to set up the communication link with the candidate device through the third frequency band. For example, a state in which other candidate devices may not be selected may include a state in which there are no other external electronic devices, excluding the candidate device, in the external electronic devices detected through the scan as being accessible by the electronic device 101 through the third frequency band. According to an embodiment, when the processor 300 may select other candidate devices, the processor 300 may identify whether the wireless LAN communication is connected with the external electronic devices selected as other candidate devices through the frequency band (e.g., about 2.4 GHz band and/or about 5 GHz band) different from the third frequency band. According to an embodiment, when the processor 300 determines that the wireless LAN communication is not connected with other candidate devices through the frequency band (e.g., about 2.4 GHz band and/or about 5 GHz band) different from the third frequency band, the processor 300 may control the communication circuit 310 to set up the communication link with other candidate devices through the third frequency band.

According to an embodiment, when there is no external electronic device detected through the scan, the processor 300 may determine that the communication link for wireless LAN communication in the third frequency band may not be set up.

According to various embodiments, when the channel state information of at least one of the plurality of links satisfies the specified reference quality condition, the processor 300 may control the communication circuit 310 to switch an external electronic device corresponding to at least one remaining link excluding at least one link satisfying the specified reference quality condition to other external electronic devices. According to an embodiment, when the channel state information of the second link corresponding to the second frequency band (e.g., about 5GHz band) satisfies the specified change condition, the processor 300 may control the communication circuit 310 to perform the scan on the first frequency band (e.g., about 2.4 GHz band) and/or the third frequency band (e.g., about 6 GHz band) excluding the second frequency band.

According to an embodiment, the processor 300 may select the candidate device based on the channel state information of at least one external electronic device detected through the scan. For example, when at least one external electronic device corresponding to the first frequency band (e.g., about 2.4 GHz band) is detected through the scan, the processor 300 may select, as the candidate device, the external electronic device having the best channel state information among at least one external electronic device detected as being accessible by the electronic device 101 through the first frequency band. For example, when at least one external electronic device corresponding to the third frequency band (e.g., about 6GHz band) is detected through the scan, the processor 300 may select, as the candidate device, the external electronic device having the best channel state information among at least one external electronic device detected as being accessible by the electronic device 101 through the third frequency band. For example, when at least one external electronic device corresponding to the first frequency band (e.g., about 2.4 GHz band) and at least one external electronic device corresponding to a third frequency band (e.g., about 6 GHz band) are detected through the scan, the processor 300 may select the external electronic device having the best channel state information among at least one external electronic device corresponding to the first frequency band as the candidate device in the first frequency band, and select the external electronic device having the best channel state information among at least one external electronic device corresponding to the third frequency band as the candidate device in the third frequency band.

According to an embodiment, when the processor 300 selects the candidate device in the first frequency band, the processor 300 may identify whether the wireless LAN communication is connected with the external electronic device selected as the candidate device through the frequency band (e.g., about 5 GHz band and/or about 6 GHz band) different from the first frequency band. For example, the processor 300 may identify whether the wireless LAN communication is connected with the candidate device through at least one different frequency band excluding the first frequency band based on the setting value of the "co-located AP" of the RNR BSS parameter included in the RNR information acquired from the candidate device through the first frequency band.

According to an embodiment, when the processor 300 determines that the wireless LAN communication is not connected with the candidate device through the frequency band (e.g., about 5 GHz band and/or about 6 GHz band) different from the first frequency band, the processor 300 may control the communication circuit 310 to switch (e.g., roam) the external electronic device corresponding to the first frequency band to the candidate device. For example, the switching to the candidate device may include a series of operations for setting up the communication link with the candidate device through the first frequency band.

According to an embodiment, when the processor 300 determines that the wireless LAN communication is connected with the candidate device through the frequency band (e.g., about 5 GHz band and/or about 6 GHz band) different from the first frequency band, the processor 300 may identify whether other candidate devices can be selected. For example, other candidate devices may include an external electronic device having the best channel state information, excluding the candidate device, among at least one external electronic device detected through the scan as being accessible by the electronic device 101 through the first frequency band.

According to an embodiment, when the processor 300 may not select other candidate devices, the processor 300 may control the communication circuit 310 to set up the communication link with the candidate device through the first frequency band. For example, the state in which other candidate devices may not be selected may include the state in which there are no other external electronic devices, excluding the candidate device, in the external electronic devices detected through the scan as being accessible by the electronic device 101 through the first frequency band.

According to an embodiment, when the processor 300 may select other candidate devices, the processor 300 may identify whether the wireless LAN communication is connected with the external electronic devices selected as other candidate devices through the frequency band (e.g., about 5 GHz band and/or about 6 GHz band) different from the first frequency band.

According to an embodiment, when the processor 300 determines that the wireless LAN communication is not connected with other candidate devices through the frequency band (e.g., about 5 GHz band and/or about 6 GHz band) different from the first frequency band, the processor 300 may control the communication circuit 310 to set up the communication links with other candidate devices through the first frequency band.

According to an embodiment, when the processor 300 selects the candidate device in the third frequency band, the processor 300 may identify whether the wireless LAN communication is connected with the external electronic device selected as the candidate device through the frequency band (e.g., about 2.4 GHz band and/or about 5 GHz band) different from the third frequency band. For example, the processor 300 may identify whether the wireless LAN communication is connected with the candidate device through at least one different frequency band excluding the third frequency band based on the setting value of the "co-located AP" of the RNR BSS parameter included in the RNR information acquired from the candidate device through the third frequency band.

According to an embodiment, when the processor 300 determines that the wireless LAN communication is not connected with the candidate device through the frequency band (e.g., about 2.4 GHz band and/or about 5 GHz band) different from the third frequency band, the processor 300 may control the communication circuit 310 to switch (e.g., roam) the external electronic device corresponding to the third frequency band to the candidate device. For example, the switching to the candidate device may include a series of operations for setting up the communication link with the candidate device through the third frequency band.

According to an embodiment, when the processor 300 determines that the wireless LAN communication is connected with the candidate device through the frequency band (e.g., about 2.4 GHz band and/or about 5 GHz band) different from the third frequency band, the processor 300 may identify whether other candidate devices can be selected. For example, other candidate devices may include an external electronic device having the best channel state information, excluding the candidate device, among at least one external electronic device detected through the scan as being accessible by the electronic device 101 through the third frequency band.

According to an embodiment, when the processor 300 may not select other candidate devices, the processor 300 may control the communication circuit 310 to set up the communication link with the candidate device through the third frequency band. For example, the state in which other candidate devices may not be selected may include the state in which there are no other external electronic devices, excluding the candidate device, in the external electronic devices detected through the scan as being accessible by the electronic device 101 through the third frequency band.

According to an embodiment, when the processor 300 may select other candidate devices, the processor 300 may identify whether the wireless LAN communication is connected with the external electronic devices selected as other candidate devices through the frequency band (e.g., about 2.4 GHz band and/or about 5 GHz band) different from the third frequency band.

According to an embodiment, when the processor 300 determines that the wireless LAN communication is not connected with other candidate devices through the frequency band (e.g., about 2.4 GHz band and/or about 5 GHz band) different from the third frequency band, the processor 300 may control the communication circuit 310 to set up the communication links with other candidate devices through the third frequency band.

According to an embodiment, when there is no external electronic device detected through the scan for the first frequency band and the third frequency band, the processor 300 may maintain the connection of the communication link for the wireless LAN communication in the first frequency band and the third frequency band.

According to various embodiments, the communication circuit 310 may support the wireless LAN communication between the electronic device 101 and the external electronic device (e.g., the first external electronic device 200 and/or the second external electronic device 220 of FIG. 2). According to an embodiment, the communication circuit 310 may include at least one communication circuit (e.g., a WLAN modem) for processing signals and/or data transmitted and/or received through the plurality of frequency bands.

According to various embodiments, the memory 320 may store various data used by at least one component (e.g., the processor 300 and/or the communication circuit 310) of the electronic device 101. According to an embodiment, the memory 310 may store various instructions that may be executed by the processor 300.

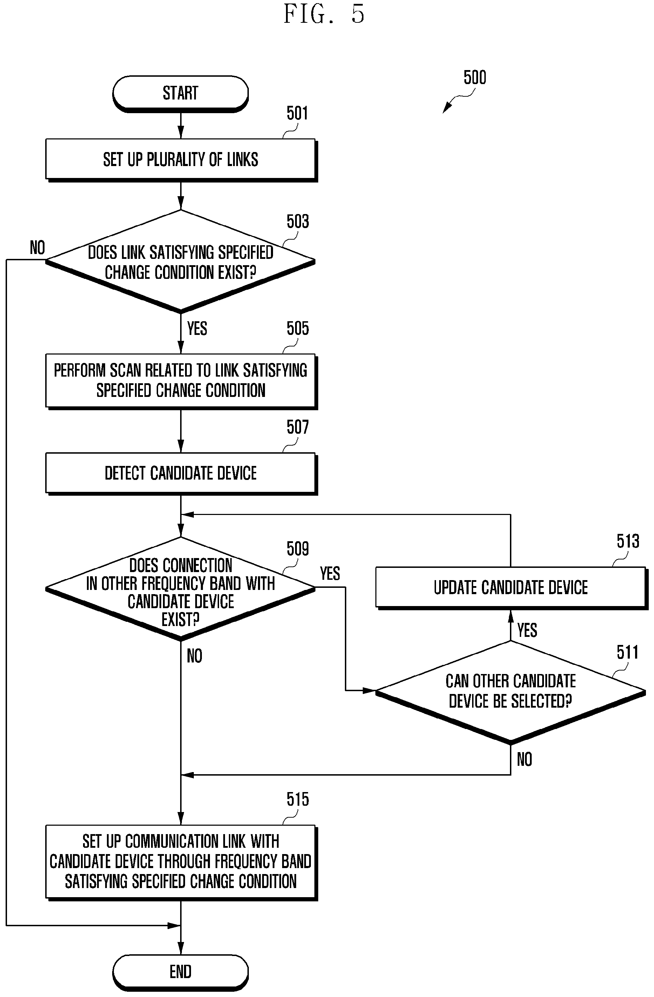

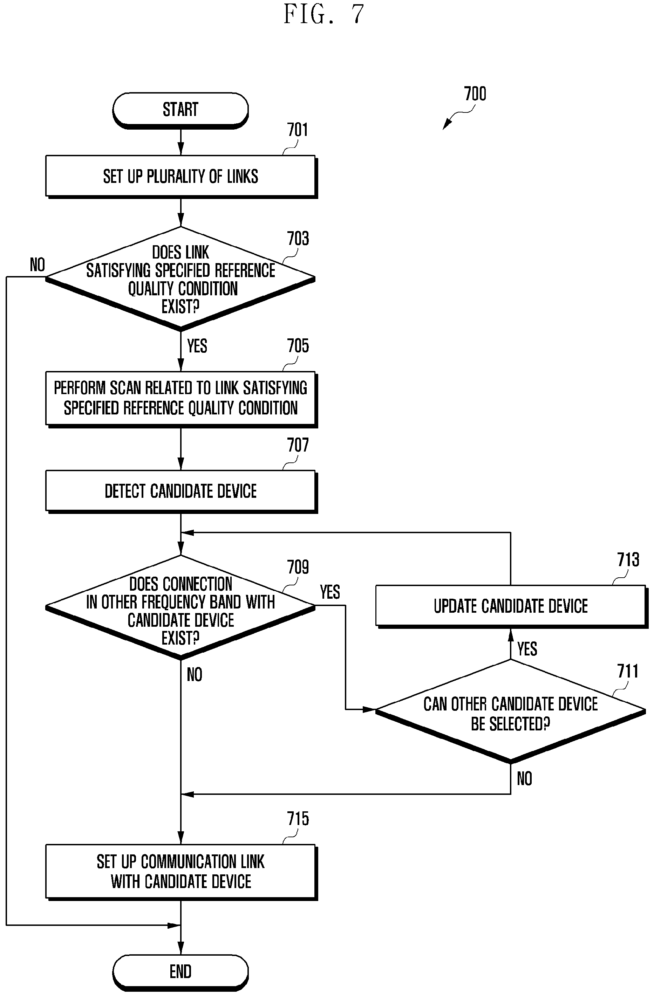

According to various embodiments, the electronic device (e.g., the electronic device 101 of FIG. 1, 2, or 3) may include a communication circuit (e.g., the wireless communication module 192 of FIG. 1 or the communication circuit 310 of FIG. 3) supporting the wireless LAN communication, and a processor (e.g., the processor 120 of FIG. 1 or the processor 300 of FIG. 3) operatively connected to the communication circuit. According to an embodiment, the processor may set up the plurality of links with at least one external electronic device (e.g., the first external electronic device 200, the second external electronic device 220, and/or the third external electronic device 600 of FIG. 2, 6, or 8). According to an embodiment, when channel state information of a link corresponding to the first frequency band among the plurality of links satisfies the specified condition (e.g., the specified change condition of FIG. 5 and/or the specified reference quality condition of FIG. 7), the processor may perform the scan. According to an embodiment, the processor may select the first external electronic device based on the channel state information of at least one external electronic device detected through the scan. According to an embodiment, the processor may select the second external electronic device based on the channel state information of the remaining external electronic devices, excluding the first external electronic device, among at least one external electronic device detected through the scan when the wireless LAN communication based on the frequency band different from the first frequency band is connected with the first external electronic device. According to an embodiment, the processor may set up the link in the first frequency band with the second external electronic device when the wireless LAN communication based on the frequency band different from the first frequency band is not connected with the second external electronic device.

According to various embodiments, when the channel state information of the link corresponding to the first frequency band satisfies the specified change condition (e.g., a specified condition), the processor may perform the scan related to the first frequency band.

According to various embodiments, when there is no external electronic device detected through the scan related to the first frequency band, the processor may determine that setting up the link for the wireless LAN communication based on the first frequency band is restricted.

According to various embodiments, when the channel state information of the link corresponding to the first frequency band satisfies the specified reference quality condition (e.g., the specified condition), the processor may perform the scan related to at least one frequency band corresponding to at least one remaining link excluding the link corresponding to the first frequency band among the plurality of links.

According to various embodiments, when there is no external electronic device detected through the scan related to at least one frequency band corresponding to at least one remaining link, the processor may determine that at least one link corresponding to at least one frequency band corresponding to at least one remaining link is maintained.

According to various embodiments, when the wireless LAN communication based on the frequency band different from the first frequency band is not connected with the first external electronic device, the processor may set up the link in the first frequency band with the first external electronic device.

According to various embodiments, when the link is not set up with the first external electronic device through the frequency band different from the first frequency band or when the channel state information of the link corresponding to the different frequency band set up with the first external device is less than or equal to a specified reference channel state information (e.g., a specified first reference channel state information), the processor may determine that the wireless LAN communication based on the different frequency band is not connected with the first external electronic device.

According to various embodiments, at least one external electronic device detected through the scan may include at least one external electronic device whose channel state information exceeds the specified reference channel state information (e.g., the specified first reference channel state information) among the external electronic devices detected through the scan.

According to various embodiments, when the wireless LAN communication based on the frequency band different from the first frequency band is connected with the first external electronic device, the processor may identify whether there are the remaining external electronic devices, excluding the first external electronic device, among at least one external electronic device detected through the scan. According to an embodiment, when there is the second external electronic device detected through the scan, the processor may identify whether the wireless LAN communication based on the frequency band different from the first frequency band is connected with the second external electronic device. According to an embodiment, the processor may set up the link in the first frequency band with the second external electronic device when the wireless LAN communication based on the frequency band different from the first frequency band is not connected with the second external electronic device.

According to various embodiments, when there are no remaining external electronic devices, excluding the first external electronic device, among at least one external electronic device detected through the scan, the processor may set up the link in the first frequency band with the first external electronic device.

According to various embodiments, when the link with the first external electronic device is set up through the frequency band different from the first frequency band or when the channel state information of the link corresponding to the frequency band different from the first frequency band set up with the first external device exceeds the specified reference channel state information, the processor may determine that the wireless LAN communication based on the different frequency band is connected with the first external electronic device.

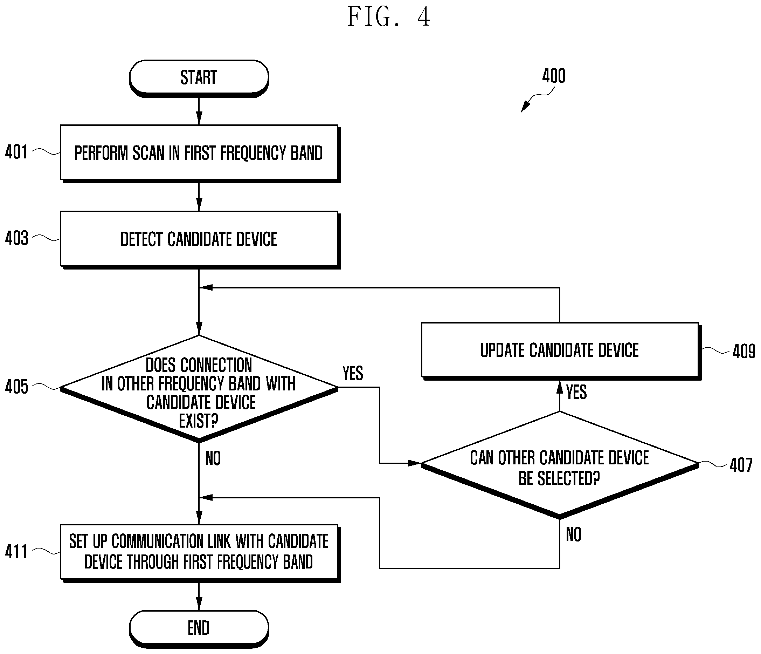

FIG. 4 is a flowchart 400 for setting up a communication link for wireless LAN communication in an electronic device according to various embodiments. In the following embodiments, each operation may be performed sequentially, but is not necessarily performed sequentially. For example, the order of each operation may be changed, and at least two operations may be performed in parallel. For example, the electronic device of FIG. 4 may be the electronic device 101 of FIG. 1, 2, or 3.

According to various embodiments referring to FIG. 4, in operation 401, the electronic device (e.g., the electronic device 101 of FIG. 1, 2, or 3) or the processor (e.g., the processor 120 of FIG. 1 or the processor 300 of FIG. 3) may perform the scan on the first frequency band (e.g., about 2.4 GHz band) to set up the communication link for the wireless LAN communication in the first frequency band (e.g., about 2.4 GHz band). For example, the scan may include a series of operations to identify whether there is the external electronic device accessible by the electronic device 101 through the first frequency band. For example, the external electronic device accessible by the electronic device 101 through the first frequency band may include the external electronic device whose channel state information related to the external electronic device exceeds the specified first reference channel state information. For example, the specified first reference channel state information may include the lowest channel state information determined to be able to perform the wireless LAN communication through the external electronic device.

According to various embodiments, in operation 403, the electronic device (e.g., the electronic device 101) or the processor (e.g., the processor 120 or 300) may select the candidate device based on the channel state information of at least one external electronic device detected through the scan. According to an embodiment, the processor 300 may select, as a candidate device, the external electronic device having the best channel state information among at least one external electronic device detected through the scan as being accessible by the electronic device 101 through the first frequency band. For example, the channel state information may include at least one of the reference signal received power (RSRP), the reference signal received quality (RSRQ), the received signal strength indicator (RSSI), or the signal to interference plus noise ratio (SINR).

According to various embodiments, in operation 405, the electronic device (e.g., the electronic device 101) or the processor (e.g., the processor 120 or 300) may identify whether the electronic device 101 is connected with the external electronic device selected as the candidate device by the wireless LAN communication through the frequency band (e.g., about 5 GHz band and/or about 6 GHz band) different from the first frequency band (e.g., about 2.4 GHz band). According to an embodiment, the processor 300 may identify whether the electronic device 101 is connected with the candidate device by the wireless LAN communication through at least one different frequency band excluding the first frequency band based on the reduced neighbor report (RNR) information acquired from the candidate device through the first frequency band. For example, the processor 300 may acquire the RNR information configured as in Table 1 (e.g., IEEE 802.11 standard) from the candidate device through the first frequency band. For example, the RNR information may include an RNR element ID, a length, and/or a RNR neighbor AP information field, as shown in Table 1.

**[Table 1]**

| | Element ID | Length | Neighbor AP Information Fields |
|---|---|---|---|
| Octets: | 1 | 1 | variable |

For example, the RNR neighbor AP information field may include a target beacon transmission time (TBTT) information header, an operating class, a channel number, and/or a TBTT information set, as shown in Table 2 (e.g., IEEE 802.11 standard).

**[Table 2]**

| | TBTT Information Header | Operating Class | Channel Number | TBTT Infor-mation Set |
|---|---|---|---|---|
| Octets: | 2 | 1 | 1 | variable |

For example, the TBTT information set of the RNR neighbor AP information field may include a neighbor AP TBTT offset, a basic service set identifier (BSSID), a short-SSID, BSS parameters, and/or a 20 MHz power spectral density (PSD), as shown in Table 3 (e.g., IEEE 802.11 standard).

**[Table 3]**

| | Neighbor AP TBTT Offset | BSSID (optional) | Short-SSID (optional) | **BSS parameters** | 20 MHz PSD |
|---|---|---|---|---|---|
| Octets: | 1 | 0 or 6 | 0 or 1 | 0 or 1 | 0 or 4 |

For example, the processor 300 may identify whether the electronic device 101 is connected with the candidate device by the wireless LAN communication through at least one different frequency band excluding the first frequency band based on the setting value of the "co-located AP" included in the basic service set (BSS) parameters configured as in Table 4 (e.g., IEEE 802.11 standard).

**[Table 4]**

| | B0 | B1 | B2 | B3 | B4 | B5 | B6 | B7 |
|---|---|---|---|---|---|---|---|---|
| | OCT Recommended | Same SSID | Multiple BSSID | Transmitted BSSID | Member Of ESS With 2.4/5 GHz Co-Located AP | Unsolicited Probe Responses Active | Co-Located AP | Reserved |
| Bits: | 1 | 1 | 1 | 1 | 1 | 1 | 1 | 1 |

For example, the RNR information may be included in the beacon signal, the file discovery signal, or the probe response signal that are received from the candidate device through the first frequency band.

According to various embodiments, when the electronic device (e.g., the electronic device 101) or the processor (e.g., the processor 120 or 300) determines that the wireless LAN communication is not connected with the candidate device through the frequency band (e.g., about 5 GHz band and/or about 6 GHz band) different from the first frequency band (e.g., 'NO' in operation 405), in operation 411, the electronic device or the processor may set up the communication link with the candidate device through the first frequency band. For example, the state in which the wireless LAN communication is not connected with the candidate device may include a state in which the link for the wireless LAN communication is not set up with the candidate device through the frequency band different from the first frequency band or a state in which the channel state information of the link corresponding to the frequency band different from the first frequency band set up with the candidate device is less than or equal to the specified first reference channel state information. For example, the specified first reference channel state information may include a minimum value of the channel state information determined to be able to perform the wireless LAN communication through the external electronic device.

According to various embodiments, when the electronic device (e.g., the electronic device 101) or the processor (e.g., the processor 120 or 300) determines that the wireless LAN communication is connected with the candidate device through the frequency band (e.g., about 5 GHz band and/or about 6 GHz band) different from the first frequency band (e.g., 'YES' in operation 405), in operation 407, the electronic device or the processor may identify whether other candidate devices can be selected. For example, other candidate devices may include the external electronic device having the best channel state information, excluding the candidate device, among at least one external electronic device detected through the scan as being accessible by the electronic device 101 through the first frequency band. For example, the state in which the wireless LAN communication is connected with the candidate device may include a state in which the link for the wireless LAN communication is set up with the candidate device through the frequency band different from the first frequency band or a state in which the channel state information of the link corresponding to the frequency band different from the first frequency band set up with the candidate device exceeds the specified first reference channel state information.

According to various embodiments, when the electronic device (e.g., the electronic device 101) or the processor (e.g., the processor 120 or 300) determines that other candidate devices may not be selected (e.g., 'No' in operation 407), in operation 411, the electronic device or the processor may set up the communication link with the candidate device through the first frequency band. For example, the state in which other candidate devices may not be selected may include the state in which there are no other external electronic devices, excluding the candidate device, in the external electronic devices detected through the scan as being accessible by the electronic device 101 through the first frequency band.

According to various embodiments, when the electronic device (e.g., the electronic device 101) or the processor (e.g., the processor 120 or 300) determines that other candidate devices may be selected (e.g., 'Yes' in operation 407), in operation 409, the electronic device or the processor may update the candidate device. According to an embodiment, the processor 300 may select, as the candidate device, the external electronic device having the best channel state information, excluding the candidate device detected in operation 403, among at least one external electronic device detected through the scan as being accessible by that the electronic device 101 through the first frequency band.

According to various embodiments, in operation 405, the electronic device (e.g., the electronic device 101) or the processor (e.g., the processor 120 or 300) may identify whether the electronic device 101 is connected with the external electronic device selected as the updated candidate device by the wireless LAN communication through the frequency band (e.g., about 5 GHz band and/or about 6 GHz band) different from the first frequency band (e.g., about 2.4 GHz band).

According to various embodiments, when the electronic device (e.g., the electronic device 101) or the processor (e.g., the processor 120 or 300) determines that the wireless LAN communication is not connected with the updated candidate device through the frequency band (e.g., about 5 GHz band and/or about 6 GHz band) different from the first frequency band (e.g., 'NO' in operation 405), in operation 411, the electronic device or the processor may set up the communication link with the updated candidate device through the first frequency band.

According to various embodiments, when there is no external electronic device detected through the scan for the first frequency band, the electronic device 101 may determine that the communication link for the wireless LAN communication in the first frequency band may not be set up.

According to various embodiments, when the wireless LAN communication is connected with the external electronic devices detected through the scan for the first frequency band through the frequency band different from the first frequency band, the electronic device 101 may set up the link based on the first frequency band with the external electronic device having the best channel state information among the external electronic devices detected through the scan for the first frequency band.

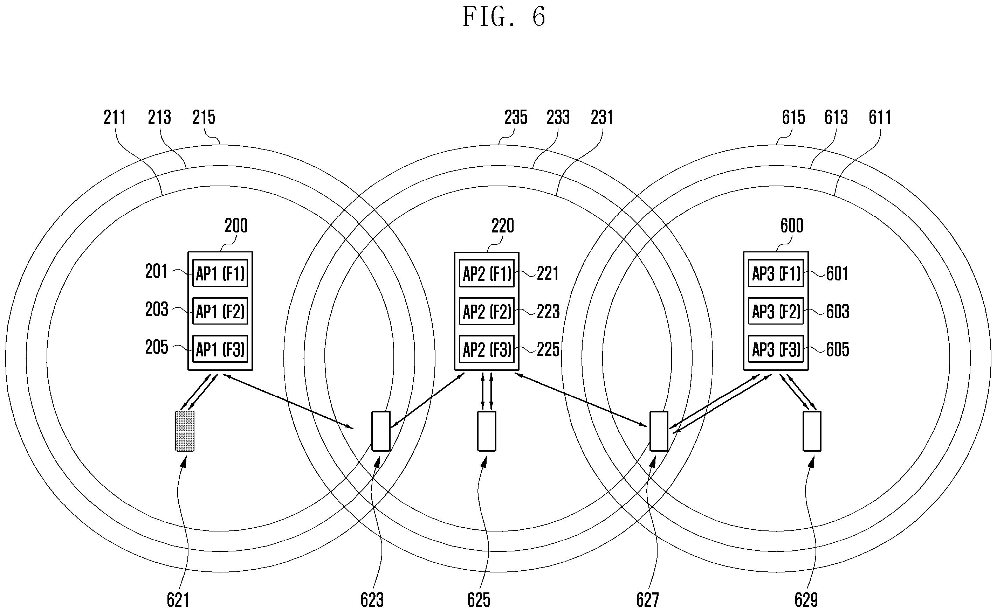

FIG. 5 is a flowchart 500 for switching an external electronic device for wireless LAN communication in an electronic device according to various embodiments. In the following embodiments, each operation may be performed sequentially, but is not necessarily performed sequentially. For example, the order of each operation may be changed, and at least two operations may be performed in parallel. For example, the electronic device of FIG. 5 may be the electronic device 101 of FIG. 1, 2, or 3. For example, at least a part of FIG. 5 may be described with reference to FIG. 6. FIG. 6 is an example for switching an external electronic device for wireless LAN communication in an electronic device according to various embodiments.

According to various embodiments referring to FIGS. 5 and 6, in operation 501, the electronic device (e.g., the electronic device 101 of FIG. 1, 2, or 3) or the processor (e.g., the processor 120 of FIG. 1 or the processor 300 of FIG. 3) may set up the plurality of links with at least one external electronic device (e.g., the first external electronic device 200 and/or the second external electronic device 220 of FIG. 6). According to an embodiment, as illustrated in FIG. 6, at a first point 621, the electronic device 101 may set up a second link corresponding to the second frequency band (e.g., about 5 GHz band) and the first link corresponding to the third frequency band (e.g., about 6 GHz band) with the first external electronic device 200.

According to various embodiments, in operation 503, the electronic device (e.g., the electronic device 101) or the processor (e.g., the processor 120 or 300) may identify whether there is at least one link satisfying the specified change condition. According to an embodiment, the processor 300 may identify the channel state information of each of the plurality of links (e.g., the first link and the second link) based on the specified period. According to an embodiment, the processor 300 may identify whether the channel state information of at least one link among the plurality of links satisfies the specified change condition. For example, at a second point 623 of FIG. 6, the processor 300 may determine that the channel state information of the first link satisfies the specified change condition. For example, the state satisfying the specified change condition is the state in which the channel state information of the first link is less than or equal to the specified first reference channel state information, and may include the state in which the wireless LAN communication is determined to be unable to be provided smoothly through the first link. For example, the specified first reference channel state information may include the lowest channel state information determined to be able to perform the wireless LAN communication through the external electronic device.

According to various embodiments, when there is no link satisfying the specified change condition (e.g., 'NO' in operation 503), the electronic device (e.g., the electronic device 101) or the processor (e.g., the processor 120 or 300) may end an embodiment for switching the external electronic device for the wireless LAN communication. According to an embodiment, when there is no link satisfying the specified change condition, the processor 300 may determine that the wireless LAN communication may be smoothly provided through the plurality of links set up by the electronic device 101 for the wireless LAN communication.

According to various embodiments, when there is the link satisfying the specified change condition (e.g., 'YES' in operation 503), in operation 505, the electronic device (e.g., the electronic device 101) or the processor (e.g., the processor 120 or 300) may perform the scan related to the link satisfying the specified change condition. According to an embodiment, when the channel state information of the first link corresponding to the third frequency band (e.g., about 6 GHz band) satisfies the specified change condition at the second point 623 of FIG. 6, the processor 300 may control the communication circuit 310 to perform the scan on the third frequency band (e.g., about 6 GHz band). For example, the scan related to the link satisfying the specified change condition may include the scan related to the frequency band of the link satisfying the specified change condition.

According to various embodiments, in operation 507, the electronic device (e.g., the electronic device 101) or the processor (e.g., the processor 120 or 300) may select the candidate device based on the channel state information of at least one external electronic device detected through the scan for at least one frequency band satisfying the specified change condition. According to an embodiment, at the second point 623 of FIG. 6, the processor 300 may select, as the candidate device, the external electronic device (e.g., the second external electronic device 220) having the best channel state information among at least one external electronic device (e.g., the first external electronic device 200 and/or the second external electronic device 220) detected through the scan for the third frequency band as being accessible by the electronic device 101 through the third frequency band. For example, the channel state information may include at least one of the reference signal received power (RSRP), the reference signal received quality (RSRQ), the received signal strength indicator (RSSI), or the signal to interference plus noise ratio (SINR).

According to various embodiments, in operation 509, the electronic device (e.g., the electronic device 101) or the processor (e.g., the processor 120 or 300) may identify whether the electronic device 101 is connected with the external electronic device selected as the candidate device by the wireless LAN communication through a frequency band (e.g., the second frequency band) different from at least one frequency band (e.g., the third frequency band) satisfying the specified change condition. According to an embodiment, the processor 300 may identify whether the electronic device 101 is connected with the candidate device by the wireless LAN communication through at least one different frequency band excluding the third frequency band based on the reduced neighbor report (RNR) information acquired from the candidate device through the third frequency band.

According to various embodiments, when the electronic device (e.g., electronic device 101) or the processor (e.g., processor 120 or 300) determines that the wireless LAN communication is not connected with the candidate device through the frequency band (e.g., the second frequency band) different from at least one frequency band (e.g., the third frequency band) satisfying the specified change condition (e.g., 'NO' in operation 509), in operation 515, the electronic device or the processor may set up the communication link with the candidate device through at least one frequency band (e.g., the third frequency band) satisfying the specified change condition. According to an embodiment, when the wireless LAN communication based on the second frequency band is not connected with the second external electronic device 220 selected as the candidate device at the second point 623 of FIG. 6, the processor 300 may control the communication circuit 310 to switch (e.g., roam) the external electronic device corresponding to the third frequency band to the candidate device. For example, the state in which the wireless LAN communication based on the second frequency band is not connected with the second external electronic device 220 may include the state in which the link corresponding to the second frequency band is not set up with the second external electronic device 220 or the state in which the channel state information of the second link corresponding to the second frequency band set up with the second external electronic device 220 is less than or equal to the specified first reference channel state information. For example, the specified first reference channel state information may include the minimum value of the channel state information determined to be able to perform the wireless LAN communication through the external electronic device. For example, at the second point 623 of FIG. 6, the electronic device 101 may set up the second link with the first external electronic device 200 through the second frequency band and the first link with the second external electronic device 220 through the third frequency band. For example, the switching to the candidate device may include a series of operations for setting up the communication link with the candidate device through the third frequency band. For example, the communication connection with the first external electronic device 200 through the third frequency band may be released based on the switching to the candidate device.

According to various embodiments, when the electronic device (e.g., the electronic device 101) or the processor (e.g., the processor 120 or 300) determines that the wireless LAN communication is connected with the candidate device through the frequency band (e.g., the second frequency band) different from at least one frequency band (e.g., the third frequency band) satisfying the specified change condition (e.g., 'YES' in operation 509), in operation 511, the electronic device or the processor may identify whether other candidate devices can be selected. For example, other candidate devices may include the external electronic device having the best channel state information, excluding the candidate device, among at least one external electronic device detected through the scan as being accessible through the corresponding frequency band by the electronic device 101 based on at least one frequency band (e.g., the third frequency band) satisfying the specified change condition. For example, the state in which the wireless LAN communication is connected with the candidate device may include a state in which the link for the wireless LAN communication is set up with the candidate device through the frequency band different from at least one frequency band or the state in which the channel state information of the link corresponding to the different frequency band set up with the candidate device exceeds the specified first reference channel state information.

According to various embodiments, when the electronic device (e.g., the electronic device 101) or the processor (e.g., the processor 120 or 300) determines that other candidate devices may not be selected (e.g., 'No' in operation 511), in operation 515, the electronic device or the processor may set up the communication link with the candidate device through at least one frequency band (e.g., the third frequency band) satisfying the specified change condition. According to an embodiment, when the candidate device is the first external electronic device 200, the processor 300 may identify whether other external electronic devices excluding the first external electronic device 200 are detected through the scan based on the third frequency band. When other external electronic devices excluding the first external electronic device 200 are not detected through the scan, the processor 300 may determine that the communication link with the first external electronic device 200 corresponding to the third frequency band is maintained.

According to various embodiments, when the electronic device (e.g., the electronic device 101) or the processor (e.g., the processor 120 or 300) determines that other candidate devices may be selected (e.g., 'Yes' in operation 511), in operation 513, the electronic device or the processor may update the candidate device. According to an embodiment, the processor 300 may select, as the candidate device, the external electronic device having the best channel state information, excluding the candidate device detected in operation 505, among at least one external electronic device detected through the scan as being accessible by that the electronic device 101 through the third frequency band.

According to various embodiments, in operation 509, the electronic device (e.g., the electronic device 101) or the processor (e.g., the processor 120 or 300) may identify whether the electronic device 101 is connected with the external electronic device selected as the updated candidate device by the wireless LAN communication through the frequency band (e.g., the second frequency band) different from at least one frequency band (e.g., the third frequency band) satisfying the specified change condition.

According to various embodiments, when the electronic device (e.g., electronic device 101) or the processor (e.g., processor 120 or 300) determines that the wireless LAN communication is not connected with the updated candidate device through the frequency band (e.g., the second frequency band) different from at least one frequency band (e.g., the third frequency band) satisfying the specified change condition (e.g., 'NO' in operation 509), in operation 515, the electronic device or the processor may set up the communication link with the updated candidate device through at least one frequency band (e.g., the third frequency band) satisfying the specified change condition.

According to various embodiments, when there is no external electronic device detected through the scan based on at least one frequency band satisfying the specified change condition, the electronic device 101 may determine that the communication link for the wireless LAN communication based on at least one frequency band (e.g., the third frequency band) satisfying the specified change condition may not be set up.

According to various embodiments, at a third point 625 of FIG. 6, the electronic device 101(or the processor 300) may set up the second link corresponding to the second frequency band (e.g., about 5 GHz band) and the first link corresponding to the third frequency band (e.g., about 6 GHz band) with the second external electronic device 220. According to an embodiment, when there are no other external electronic devices excluding the second external electronic device 220 detected through the scan based on the second frequency band and/or the third frequency band at the third point 625 of FIG. 6, the electronic device 101 (or the processor 300) may set up the plurality of links with the second external electronic device 220.

According to an embodiment, when the electronic device 101 (or the processor 300) is located at a fourth point 627 of FIG. 6, the electronic device 101 (or the processor 300) may determine that the channel state information of the first link corresponding to the third frequency band satisfies the specified change condition. According to an embodiment, at the fourth point 627 of FIG. 6, the electronic device 101 (or the processor 300) may select, as the candidate device, the external electronic device (e.g., the second external electronic device 220) having the best channel state information among at least one external electronic device (e.g., the second external electronic device 220 and/or the third external electronic device 600) detected through the scan for the third frequency band as being accessible by the electronic device 101 through the third frequency band. For example, the third external electronic device 600 may support a plurality of frequency bands (e.g., about 2.4 GHz band, about 5 GHz band, and/or about 6 GHz band) 601, 603, and/or 605. According to an embodiment, when the communication link based on the second frequency band is set up with the second external electronic device 220 selected as the candidate device at the fourth point 627 of FIG. 6, the electronic device 101 (or the processor 300) may select the third external electronic device 600 as the candidate device. According to an embodiment, when the communication link based on the second frequency band is not set up with the third external electronic device 600, the electronic device 101 (or the processor 300) may set up the communication link with the third external electronic device 600 through the third frequency band. For example, at the fourth point 627 of FIG. 6, the electronic device 101 may set up the second link with the second external electronic device 220 through the second frequency band and the first link with the third external electronic device 600 through the third frequency band. According to an embodiment, at a fifth point 629 of FIG. 6, the electronic device 101 (or the processor 300) may set up the second link corresponding to the second frequency band (e.g., about 5 GHz band) and the first link corresponding to the third frequency band (e.g., about 6 GHz band) with the third external electronic device 600. For example, when other external electronic devices excluding the third external electronic device 600 are not detected through the scan based on the second frequency band and/or the third frequency band at the fifth point 629 of FIG. 6, the electronic device 101 (or the processor 300) may set up the plurality of links with the third external electronic device 600.

According to various embodiments, when the wireless LAN communication is connected with external electronic devices detected through the scan for at least one frequency band satisfying the specified change condition through the frequency band different from at least one frequency band satisfying the specified change condition, the electronic device 101 may set up the link based on the external electronic device having the best channel state information among the external electronic devices detected through the scan and at least one frequency band satisfying the specified change condition.

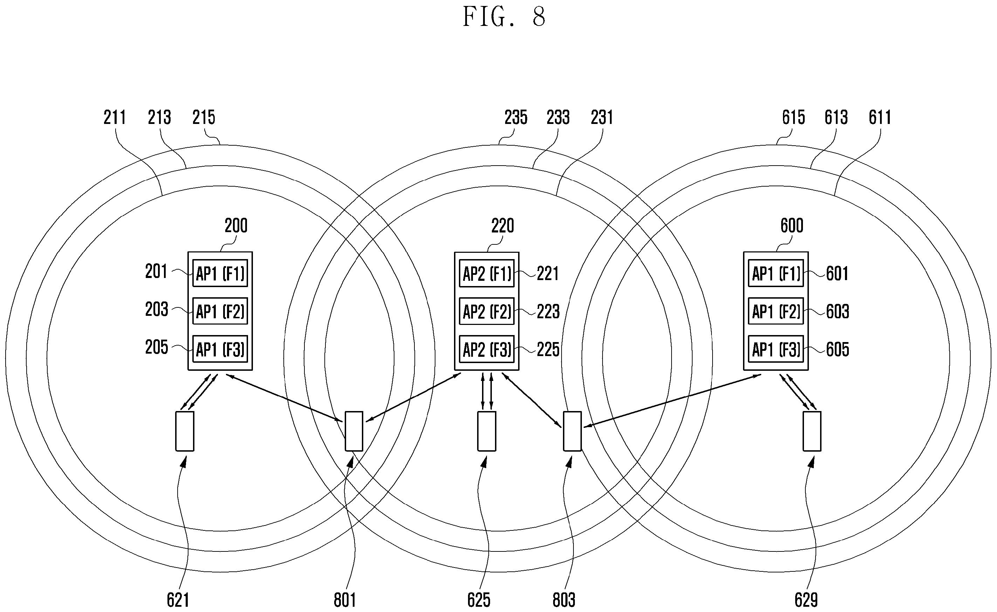

FIG. 7 is a flowchart 700 for switching an external electronic device for wireless LAN communication in an electronic device according to various embodiments. In the following embodiments, each operation may be performed sequentially, but is not necessarily performed sequentially. For example, the order of each operation may be changed, and at least two operations may be performed in parallel. For example, the electronic device of FIG. 7 may be the electronic device 101 of FIG. 1, 2, or 3. For example, at least a part of FIG. 7 may be described with reference to FIG. 8. FIG. 8 is an example for switching an external electronic device for wireless LAN communication in an electronic device according to various embodiments.

According to various embodiments referring to FIGS. 7 and 8, in operation 701, the electronic device (e.g., the electronic device 101 of FIG. 1, 2, or 3) or the processor (e.g., the processor 120 of FIG. 1 or the processor 300 of FIG. 3) may set up the plurality of links with at least one external electronic device (e.g., the first external electronic device 200 and/or the second external electronic device 220 of FIG. 8). According to an embodiment, as illustrated in FIG. 8, at a first point 621, the electronic device 101 may set up a second link corresponding to the second frequency band (e.g., about 5 GHz band) and the first link corresponding to the third frequency band (e.g., about 6 GHz band) with the first external electronic device 200.

According to various embodiments, in operation 703, the electronic device (e.g., the electronic device 101) or the processor (e.g., the processor 120 or 300) may identify whether there is at least one link satisfying the specified reference quality condition. According to an embodiment, the processor 300 may identify the channel state information of each of the plurality of links (e.g., the first link and the second link) based on the specified period. According to an embodiment, the processor 300 may identify whether the channel state information of at least one link among the plurality of links satisfies the specified reference quality condition. For example, at a sixth point 801 of FIG. 8, the processor 300 may determine that the channel state information of the second link satisfies the specified reference quality condition. For example, a state of satisfying the specified reference quality condition is a state in which the channel state information of the second link exceeds the specified second reference channel state information and may include a state in which a service quality required by the electronic device 101 is satisfied using only the second link. For example, the specified second reference channel state information may include the lowest channel state information that is determined to satisfy the service quality required by the electronic device 101 via the wireless LAN communication.

According to various embodiments, when there is no link satisfying the specified reference quality condition (e.g., 'NO' in operation 703), the electronic device (e.g., the electronic device 101) or the processor (e.g., the processor 120 or 300) may end an embodiment for switching the external electronic device for the wireless LAN communication. According to an embodiment, when there is no link satisfying the specified reference quality condition, the processor 300 may determine that the service quality required by the electronic device 101 via the wireless LAN communication may be satisfied through the plurality of links set up with at least one external electronic device.

According to various embodiments, when there is the link satisfying the specified reference quality condition (e.g., 'YES' in operation 703), in operation 705, the electronic device (e.g., the electronic device 101) or the processor (e.g., the processor 120 or 300) may perform the scan related to the remaining links excluding the link (e.g., the second link) satisfying the specified reference quality condition. According to an embodiment, when the channel state information of the second link corresponding to the second frequency band (e.g., about 5 GHz band) satisfies the specified reference quality condition at the sixth point 801 of FIG. 8, the processor 300 may control the communication circuit 310 to perform the scan on the third frequency band (e.g., about 6 GHz band) excluding the second frequency band. For example, the scan related to the remaining links may include a scan related to the frequency band of the link that does not satisfy the specified reference quality condition.

According to various embodiments, in operation 707, the electronic device (e.g., the electronic device 101) or the processor (e.g., the processor 120 or 300) may select the candidate device based on the channel state information of at least one external electronic device detected through the scan based on the frequency band (e.g., the third frequency band) corresponding to the remaining links excluding the link (e.g., the second link) satisfying the specified reference quality condition. According to an embodiment, at the sixth point 801 of FIG. 8, the processor 300 may select, as the candidate device, the external electronic device (e.g., the first external electronic device 200) having the best channel state information among at least one external electronic device (e.g., the first external electronic device 200 and/or the second external electronic device 220) detected through the scan for the third frequency band as being accessible by the electronic device 101 through the third frequency band. For example, the channel state information may include at least one of the reference signal received power (RSRP), the reference signal received quality (RSRQ), the received signal strength indicator (RSSI), or the signal to interference plus noise ratio (SINR).

According to various embodiments, in operation 709, the electronic device (e.g., the electronic device 101) or the processor (e.g., the processor 120 or 300) may identify whether the electronic device 101 is connected with the external electronic device selected as the candidate device by the wireless LAN communication through the frequency band (e.g., the second frequency band) different from the frequency band (e.g., the third frequency band) performing the scan. According to an embodiment, the processor 300 may identify whether the electronic device 101 is connected with the candidate device by the wireless LAN communication through at least one different frequency band excluding the third frequency band based on the reduced neighbor report (RNR) information acquired from the candidate device through the third frequency band.

According to various embodiments, when the electronic device (e.g., electronic device 101) or the processor (e.g., processor 120 or 300) determines that the wireless LAN communication is not connected with the candidate device through the frequency band (e.g., the second frequency band) different from the frequency band (e.g., the third frequency band) performing the scan (e.g., 'NO' in operation 709), in operation 715, the electronic device or the processor may set up the communication link with the candidate device through the frequency band (e.g., the third frequency band) corresponding to the remaining links excluding the link (e.g., the second link) satisfying the specified reference quality condition. For example, the state in which the wireless LAN communication is not connected with the candidate device may include the state in which the link for the wireless LAN communication is not set up with the candidate device through the frequency band different from the frequency band performing the scan or the state in which the channel state information of the link corresponding to the different frequency band set up with the candidate device is less than or equal to the specified first reference channel state information.

According to various embodiments, when the electronic device (e.g., the electronic device 101) or the processor (e.g., the processor 120 or 300) determines that the wireless LAN communication is connected with the candidate device through the frequency band (e.g., the second frequency band) different from the frequency band (e.g., the third frequency band) performing the scan (e.g., 'YES' in operation 709), in operation 711, the electronic device or the processor may identify whether other candidate devices can be selected. For example, other candidate devices may include the external electronic device having the best channel state information, excluding the candidate device, among at least one external electronic device detected through the scan as being accessible through the corresponding frequency band by the electronic device 101 based on at least one frequency band (e.g., the third frequency band) satisfying the specified change condition. For example, the state in which the wireless LAN communication is connected with the candidate device may include the state in which the link for the wireless LAN communication is set up with the candidate device through the frequency band different from the frequency band performing the scan or the state in which the channel state information of the link corresponding to the different frequency band set up with the candidate device exceeds the specified first reference channel state information.

According to various embodiments, when the electronic device (e.g., the electronic device 101) or the processor (e.g., the processor 120 or 300) determines that other candidate devices may not be selected (e.g., 'No' in operation 711), in operation 715, the electronic device or the processor may set up the communication link with the candidate device through the frequency band (e.g., the third frequency band) corresponding to the remaining links excluding the link (e.g., the second link) satisfying the specified reference quality condition. According to an embodiment, when the candidate device is the first external electronic device 200, the processor 300 may identify whether other external electronic devices excluding the first external electronic device 200 are detected through the scan based on the third frequency band. When other external electronic devices excluding the first external electronic device 200 are not detected through the scan, the processor 300 may determine that the communication link with the first external electronic device 200 corresponding to the third frequency band is maintained.

According to various embodiments, when the electronic device (e.g., the electronic device 101) or the processor (e.g., the processor 120 or 300) determines that other candidate devices may be selected (e.g., 'Yes' in operation 711), in operation 713, the electronic device or the processor may update the candidate device. According to an embodiment, at the sixth point 801 of FIG. 8, the processor 300 may select, as the candidate device, the second external electronic device 220 having the best channel state information, excluding the first external electronic device 200 detected in operation 705, among at least one external electronic device detected through the scan based on the third frequency band as being accessible by the electronic device 101 through the third frequency band.

According to various embodiments, in operation 709, the electronic device (e.g., the electronic device 101) or the processor (e.g., the processor 120 or 300) may identify whether the electronic device 101 is connected with the external electronic device selected as the updated candidate device by the wireless LAN communication through the frequency band (e.g., the second frequency band) different from the frequency band (e.g., the third frequency band) performing the scan.

According to various embodiments, when the electronic device (e.g., electronic device 101) or the processor (e.g., processor 120 or 300) determines that the wireless LAN communication is not connected with the updated candidate device through the frequency band (e.g., the second frequency band) different from the frequency band (e.g., the third frequency band) performing the scan (e.g., 'NO' in operation 709), in operation 715, the electronic device or the processor may set up the communication link with the candidate device through the frequency band (e.g., the third frequency band) corresponding to the remaining links excluding the link (e.g., the second link) satisfying the specified reference quality condition. According to an embodiment, when the wireless LAN communication based on the second frequency band is not connected with the second external electronic device 220 selected as the candidate device at the sixth point 801 of FIG. 8, the processor 300 may control the communication circuit 310 to switch (e.g., roam) the external electronic device corresponding to the third frequency band to the second external electronic device 220. For example, at the sixth point 801 of FIG. 8, the electronic device 101 may set up the second link with the first external electronic device 200 through the second frequency band and the first link with the second external electronic device 220 through the third frequency band. For example, the switching to the candidate device may include a series of operations for setting up the communication link with the candidate device through the third frequency band. For example, the communication connection with the first external electronic device 200 through the third frequency band may be released based on the switching to the candidate device.

According to various embodiments, when no external electronic device is detected through the scan related to the remaining links excluding the link (e.g., the second link) satisfying the specified reference quality condition, the electronic device 101 may maintain the connection of the communication link for the wireless LAN communication in the frequency band (e.g., a third frequency band) corresponding to the remaining links excluding the link (e.g., a second link) satisfying the specified reference quality condition. According to an embodiment, when the channel state information of the second link satisfies the specified reference signal quality condition at the third point 625 of FIG. 8, the electronic device 101 (or the processor 300) may perform the scan based on the third frequency band. According to an embodiment, when there are no other external electronic devices excluding the second external electronic device 220 detected through the scan based on the third frequency band, the electronic device 101 (or the processor 300) may maintain the plurality of links with the second external electronic device 220.

According to an embodiment, when the electronic device 101 (or the processor 300) is located at a seventh point 803 of FIG. 8, the electronic device 101 (or the processor 300) may determine that the channel state information of the second link corresponding to the second frequency band satisfies the specified reference signal quality condition. According to an embodiment, when the channel state information of the second link satisfies the specified reference signal quality condition at the seventh point 803 of FIG. 8, the electronic device 101 (or the processor 300) may detect at least one external electronic device (e.g., the second external electronic device 220 and/or the third external electronic device 600) accessible by the electronic device 101 through the third frequency band through the scan for the third frequency band.

According to an embodiment, the electronic device 101 (or the processor 300) may select, as the candidate device, the external electronic device (e.g., the second external electronic device 220) having the best channel state information among at least one external electronic device (e.g., the second external electronic device 220 and/or the third external electronic device 600) detected through the scan for the third frequency band as being accessible by the electronic device 101 through the third frequency band.

According to an embodiment, when the communication link based on the second frequency band is set up with the second external electronic device 220 selected as the candidate device at the seventh point 803 of FIG. 8, the electronic device 101 (or the processor 300) may select the third external electronic device 600 as the candidate device. According to an embodiment, when the communication link based on the second frequency band is not set up with the third external electronic device 600, the electronic device 101 (or the processor 300) may set up the communication link with the third external electronic device 600 through the third frequency band. For example, at the seventh point 803 of FIG. 8, the electronic device 101 may set up the second link with the second external electronic device 220 through the second frequency band and the first link with the third external electronic device 600 through the third frequency band.

According to various embodiments, at a fifth point 629 of FIG. 6, the electronic device 101(or the processor 300) may set up the second link corresponding to the second frequency band (e.g., about 5 GHz band) and the first link corresponding to the third frequency band (e.g., about 6 GHz band) with the third external electronic device 600. For example, when the channel state information of the second link satisfies the specified reference signal quality condition at the fifth point 629 of FIG. 8, the electronic device 101 (or the processor 300) may perform the scan based on the third frequency band. For example, when there are no other external electronic devices excluding the third external electronic device 600 detected through the scan based on the third frequency band, the electronic device 101 (or the processor 300) may maintain the plurality of links with the third external electronic device 600.

According to various embodiments, when the wireless LAN communication is connected with the external electronic devices detected through the scan for the frequency band corresponding to the remaining links excluding the link satisfying the specified reference quality condition through the frequency band different from the frequency band corresponding to the remaining links, the electronic device 101 may set up the link based on the frequency band corresponding to the remaining links excluding the link satisfying the specified reference quality condition with the external electronic device having the best channel state information among the external electronic devices detected through the scan.

According to various embodiments, a method for operating an electronic device (e.g., the electronic device 101 of FIG. 1, 2, or 3) may include an operation of setting up the plurality of links with at least one external electronic device (e.g., the first external electronic device 200, the second external electronic device 220, and/or the third external device 600 of FIG. 2, 6, or 8) based on the wireless LAN communication. According to an embodiment, when the channel state information of the link corresponding to the first frequency band among the plurality of links satisfies the specified condition (e.g., the specified change condition of FIG. 5 and/or the specified reference quality condition of FIG. 7), the method for operating an electronic device may include an operation of performing the scan. According to an embodiment, the method for operating an electronic device may include an operation of selecting the first external electronic device based on the channel state information of at least one external electronic device detected through the scan. According to an embodiment, the method for operating an electronic device may include an operation of selecting the second external electronic device based on the channel state information of the remaining external electronic devices, excluding the first external electronic device, among the at least one external electronic device detected through the scan when the wireless LAN communication based on the frequency band different from the first frequency band is connected with the first external electronic device. According to an embodiment, the method for operating an electronic device may include an operation of setting up the link in the first frequency band with the second external electronic device when the wireless LAN communication based the frequency band different from the first frequency band is not connected with the second external electronic device.

According to various embodiments, when the channel state information of the link corresponding to the first frequency band satisfies the specified change condition (e.g., the specified condition), the method for operating an electronic device may include an operation of performing the scan related to the first frequency band.

According to various embodiments, when there is no external electronic device detected through the scan related to the first frequency band, the method for operating an electronic device may include an operation of determining that setting up the link for the wireless LAN communication based on the first frequency band is restricted.

According to various embodiments, when the channel state information of the link corresponding to the first frequency band satisfies the specified reference quality condition (e.g., the specified condition), the method for operating an electronic device may include an operation of performing the scan related to at least one frequency band corresponding to at least one remaining link excluding the link corresponding to the first frequency band among the plurality of links.

According to various embodiments, when there is no external electronic device detected through the scan related to at least one frequency band corresponding to at least one remaining link, the method for operating an electronic device may determine that at least one link corresponding to at least one frequency band corresponding to at least one remaining link is maintained.

According to various embodiments, when the wireless LAN communication based the frequency band different from the first frequency band is not connected with the first external electronic device, the method for operating an electronic device may include an operation of setting up the link in the first frequency band with the first external electronic device.

According to various embodiments, when the link with the first external electronic device is not set up through the frequency band different from the first frequency band or when the channel state information of the link corresponding to the frequency band different from the first frequency band set up with the first external device is less than or equal to the specified reference quality, the method for operating an electronic device may determine that the wireless LAN communication based on the different frequency band is not connected with the first external electronic device.

According to various embodiments, at least one external electronic device detected through the scan may include at least one external electronic device whose channel state information exceeds the specified reference channel state information (e.g., the specified first reference channel state information) among the external electronic devices detected through the scan.

According to various embodiments, the operation of setting up the link of the first frequency band may include an operation of identifying whether there are the remaining external electronic devices, excluding the first external electronic device, among at least one external electronic device detected through the scan when the wireless LAN communication based on the frequency band different from the first frequency band is connected with the first external electronic device, an operation of identifying whether the wireless LAN communication based on the frequency band different from the first frequency band is connected with the second external electronic device when there is the second external electronic device detected through the scan, and an operation of setting up the link in the first frequency band with the second external electronic device when the wireless LAN communication based on the frequency band different from the first frequency band is not connected with the second external electronic device.

According to various embodiments, the method for operating an electronic device may include an operation of setting up the link in the first frequency band with the first external electronic device when there are no remaining external electronic devices, excluding the first external electronic device, among at least one external electronic device detected through the scan.

According to various embodiments, the method for operating an electronic device may include an operation of determining that the wireless LAN communication based on the different frequency band is connected with the first external electronic device when the link is set up with the first external electronic device through the frequency band different from the first frequency band or when the channel state information of the link corresponding to the frequency band different from the first frequency band set up with the first external device exceeds the specified reference channel information.

The embodiments of the present disclosure disclosed in this specification and drawings present merely specific examples to easily describe the technical contents according to the embodiments of the present document and to help understand the embodiments of the present disclosure, and are not intended to limit the scope of the embodiments of the present disclosure. Therefore, the scope of various embodiments of the present disclosure should be interpreted that all changes or modifications derived based on the technical idea of various embodiments of the present disclosure, in addition to the embodiments described herein, are included in the scope of various embodiments of the present disclosure.

## Claims

1. An electronic device, comprising:
a communication circuit supporting a plurality of frequency bands for wireless LAN communication; and
a processor operatively connected to the communication circuit,
wherein the processor is configured to:
set up a plurality of links with at least one external electronic device,
perform a scan when channel state information of a link corresponding to a first frequency band among the plurality of links satisfies specified conditions,
select a first external electronic device based on channel state information of at least one external electronic device detected through the scan,
select a second external electronic device based on channel state information of the remaining external electronic devices, excluding the first external electronic device, among the at least one external electronic device detected through the scan when the wireless LAN communication based on a frequency band different from the first frequency band is connected with the first external electronic device, and
set up a link in the first frequency band with the second external electronic device when the wireless LAN communication based on the different frequency band is not connected with the second external electronic device.

2. The electronic device of claim 1, wherein the processor is further configured to perform the scan related to the first frequency band when the channel state information of the link corresponding to the first frequency band satisfies a specified change condition among the specified conditions.

3. The electronic device of claim 2, wherein the processor is further configured to determine that setting up a link for the wireless LAN communication based on the first frequency band is restricted when there is no external electronic device detected through the scan related to the first frequency band.

4. The electronic device of claim 1, wherein the processor is further configured to perform a scan related to at least one frequency band corresponding to at least one remaining link excluding the link corresponding to the first frequency band among the plurality of links when the channel state information of the link corresponding to the first frequency band satisfies a specified reference quality condition among the specified conditions.

5. The electronic device of claim 4, wherein the processor is further configured to determine that at least one link corresponding to the at least one frequency band corresponding to the at least one remaining link is maintained when there is no external electronic device detected through the scan related to at least one frequency band corresponding to the at least one remaining link.

6. The electronic device of claim 1, wherein the processor is further configured to set up a link in the first frequency band with the first external electronic device when the wireless LAN communication based on the different frequency band is not connected with the first external electronic device.

7. The electronic device of claim 1, wherein the processor is further configured to set up a link in the first frequency band with the first external electronic device when there are no remaining external electronic devices, excluding the first external electronic device, among the at least one external electronic device detected through the scan.

8. A method for operating an electronic device, comprising:
setting up a plurality of links with at least one external electronic device through wireless LAN communication;
performing a scan when channel state information of a link corresponding to a first frequency band among the plurality of links satisfies specified conditions;
selecting a first external electronic device based on the channel state information of at least one external electronic device detected through the scan;
selecting a second external electronic device based on the channel state information of the remaining external electronic devices, excluding the first external electronic device, among the at least one external electronic device detected through the scan when the wireless LAN communication based on a frequency band different from the first frequency band is connected with the first external electronic device; and
setting up a link in the first frequency band with the second external electronic device when the wireless LAN communication based on the different frequency band is not connected with the second external electronic device.

9. The method of claim 8, wherein the performing of the scan includes performing the scan related to the first frequency band when the channel state information of the link corresponding to the first frequency band satisfies a specified change condition among the specified conditions.

10. The method of claim 9, further comprising:
determining that setting up a link for the wireless LAN communication based on the first frequency band is restricted when there is no external electronic device detected through the scan related to the first frequency band.

11. The method of claim 8, wherein the performing of the scan includes performing a scan related to at least one frequency band corresponding to at least one remaining link excluding the link corresponding to the first frequency band among the plurality of links when the channel state information of the link corresponding to the first frequency band satisfies a specified reference quality condition among the specified conditions.

12. The method of claim 11, further comprising:
determining that at least one link corresponding to the at least one frequency band corresponding to the at least one remaining link is maintained when there is no external electronic device detected through the scan related to at least one frequency band corresponding to the at least one remaining link.

13. The method of claim 8, further comprising:
setting up a link in the first frequency band with the first external electronic device when the wireless LAN communication based on the different frequency band is not connected with the first external electronic device.

14. The method of claim 8, further comprising:
setting up a link in the first frequency band with the first external electronic device when there are no remaining external electronic devices, excluding the first external electronic device, among the at least one external electronic device detected through the scan.

15. The method of claim 8, further comprising:
determining that the wireless LAN communication based on the different frequency band is connected with the first external electronic device when a link with the first external electronic device is set up through the different frequency band or when the channel state information of the link corresponding to the different frequency band set up with the first external device exceeds a specified reference quality.
